# EUROPEAN PATENT SPECIFICATION

(11) **EP 3 233 235 B1**
(45) Date of publication and mention of the grant of the patent: **27.01.2021**
(21) Application number: 15870982.4
(22) Date of filing: 16.12.2015
(51) Int. Cl.: B01D 35/30, B01D 29/15, B01D 36/00, B01D 35/26, B01D 24/10, B01D 46/42, B01D 35/18, B01D 29/90

(54) **MODULAR FILTER CAPSULE APPARATUS**
MODULARE FILTERKAPSELVORRICHTUNG
APPAREIL À CAPSULE FILTRANTE MODULAIRE

(30) Priority: 16.12.2014 US 201414572766
(43) Date of publication of application: 25.10.2017
(73) Proprietor: Saint-Gobain Performance Plastics Corporation, Aurora, OH 44202 (US)
(72) Inventor: LIN, Zhenwu, Pasadena, CA 91105 (US); LORUSSO, Mark, Portsmouth, NH 03801 (US)
(74) Representative: Zimmermann & Partner Patentanwälte mbB
(86) International application number: PCT/US2015/066086
(87) International publication number: WO 2016/100510

(56) References cited:
- FR-A1- 2 345 201
- US-A- 2 514 366
- US-A- 4 298 465
- US-A- 5 094 750
- US-A- 5 762 789
- US-A1- 2006 060 512
- US-A1- 2007 119 772
- US-A1- 2007 119 772
- US-A1- 2012 223 002
- US-A1- 2012 223 002
- US-A1- 2014 263 106
- US-B1- 6 290 848
- US-B2- 7 081 201
- US-B2- 7 407 594
- US-B2- 7 407 594

## Description

### FIELD OF THE DISCLOSURE

The disclosure relates to filter capsule apparatus used to enclose filters that separate and remove solid, liquid and/or gaseous contaminants and/or intermix and introduce one liquid or gas into a second liquid or gas. More particularly, the disclosure concerns combined filter shell or housing, enclosed filter and filter capsule inlet and outlet configurations to improve uniform heat transmission of heated or cooled liquids introduced into a filter capsule apparatus, to permit the combined use of loose media and filter membranes and cartridges as well as to improve the serviceability and adaptability to larger assemblies.

### BACKGROUND OF THE DISCLOSURE

To filter liquids and/or gases of undesired contaminants, filters and/or purification media e.g., granular resins, granulated carbon, carbon fiber, soda lime and the like, are used in enclosed filter housings to effectuate contaminant removal. In a common filter capsule configuration, ports are positioned to occupy different planes or extend from the capsule in different directions, such as shown in published application No.: US 2010/0282665. In that application, the inlet and outlet ports are positioned at diametrically opposed locations at the top end of the capsule. This configuration requires a substantial amount of space within a larger assembly to receive the capsule and to secure the ports, which thereby limits the possible orientation variations if a panel mount configuration is desired. It further increases the effort needed to attach the capsule as connections have to be made at two entirely different locations. What is needed is a filter capsule having ports oriented to extend from a capsule in a uniform direction to reduce the space required for attachment to a larger assembly and to facilitate the simultaneous connection of multiple tubes for the ingress and egress of desired fluids and/or gases. US 2007/119772 A1 relates to a filter comprising a housing and a filter cartridge. The housing includes an inlet, an outlet, a vent, and a filter cartridge chamber. The filter cartridge is permanently positioned in the filter cartridge chamber of the housing with an annular channel between the filter cartridge and the housing. The bottom of the filter cartridge and the interior of the bottom of the housing each include a surface which inclines upwardly toward the annular channel. US 2012/223002 A1 relates to a capsule apparatus having a filter housing defining a filter chamber with a top cap having a plurality of ports extending substantially laterally from a top end of the top cap to reduce the overall dimensions of the apparatus. The lateral and substantially uniform orientation of the ports facilitates connection to panel mount assemblies and improves filter maintenance processes.

Yet, a further problem associated with filter capsules, particularly those with inlet ports located at the tops of the capsules, is post filtration sanitation. The infusion of hot liquids (or even in some applications, the introduction of cooled liquids and/or gases), such as hot water for sanitation processes, results in the formation of a significant temperature gradient whereby liquid introduced into the top end of the filter capsule (the locus of the inlet port), has a much higher temperature than the liquid located at the bottom of the capsule. What is needed is an inlet system that originates from a filter capsule top, but that directs incoming hot (or cooled) liquids to the bottom of the capsule to harness rising heat transfer in the introduced liquids and/or gases to create a significantly more uniform temperature gradient from bottom to top.

A yet further problem results when trying to combine loose particulate (e.g., resin) based filters such as activated carbon with membrane or cartridge based filters constructed from membrane and fibrous type filter media. Loose resin based filter materials such as activated carbon filters are particulate and create flow fields that only permit liquid and/or gas flow in a single direction. The addition of a cartridge based filter with a defined and designated downstream core, positioned downstream of the loose particulate material, further limits the location of an outlet port at a downstream or bottom end of the capsule. For applications with tight spatial requirements, it is not currently possible to position an outlet at the top or upstream end of a capsule when using loose material, e.g., loose particulate based filter media. What is needed is a filter capsule construction that permits the location of the outlet port at the top of the filter capsule when using loose particular filter media. These and other objects of the disclosure will become apparent from a reading of the following summary and detailed description of the disclosure as well as a review of the appended drawings.

### SUMMARY OF THE DISCLOSURE

Disclosed herein is a filter capsule apparatus as defined in claims 1 and 11. In one aspect of the disclosure, the capsule apparatus for enclosing filters includes a plurality of ports extending from a top end of the apparatus whereby at least a portion of each port extends at an angle substantially orthogonal to the longitudinal axis of the capsule. Alternatively, the angle may deviate by about +/- 30°, and as much as +/- 45° from the orthogonal orientation. The ports are further oriented to extend from the capsule in the same general direction and occupy substantially the same plane. Each port is dedicated to a particular function, e.g., ingress (inlet), egress (outlet) and exhaust (vent).

In another aspect of the disclosure, at least two ports include quick coupling fittings to facilitate expedient, efficient and reliable connection and disassembly to larger assemblies, or to dedicated ingress or egress (and optionally exhaust) tubes. Each coupling may be configured as either a male or female fitting to accommodate a variety of connection configurations and requirements. Each coupling may further be configured to include a check valve integrated with either a male or female configured fitting.

In a yet further aspect of the disclosure, a fluid inlet is formed and positioned at a top end of a filter capsule. A transfer tube is formed on, inside, or in a wall of the filter capsule and extends along the length of the filter capsule wall. The inlet is connected to, and in fluid communication with, a proximal end of the transfer tube. A distal end of the tube extends at least proximal to a bottom end of the capsule. The distal end opens into the filter chamber and allows for the flow of fluids introduced into the tube to flow into the filter chamber from a bottom end of the chamber. An optional dispersion ring with a plurality of bores or slots may be formed or secured in a bottom end of the filter chamber in fluid communication with a bottom or distal end of the transfer tube. In a yet further alternative embodiment, a dispersion plate with a plurality of bores or slots formed therein may be placed in, or formed in, the filter chamber in close proximity to a bottom end of the chamber to create a dispersion chamber for the uniform dispersion of liquids and/or gases about the enclosed filter cartridge/filter introduced into the filter chamber via the transfer tube.

A filter capsule may include a cylindrical shield formed or placed inside the capsule between the capsule inner wall and a filter secured therein. The shield extends from substantially the top of the inner capsule to a point or plane in close proximity to, but not in substantial contact with, a bottom of the capsule so as to form a gap between a bottom edge of the shield and the inner wall of the capsule bottom. The shield combines with the capsule inner wall to form a first annular chamber that extends substantially from the inner top of the capsule to a point or plane in close proximity to, but not in contact with, the bottom of the capsule. A second annular chamber is formed between an inner wall of the shield and the enclosed filter. The gap formed at the bottom between the shield and the capsule bottom allows fluid communication between the chambers at the bottom of the capsule. An inlet extending from the capsule in fluid communication with the first chamber allows fluid to flow from the inlet down through the first annular chamber, through the gap and up into the second, filter-containing chamber.

In a yet further aspect of the disclosure, the apparatus for securing and containing a filter includes a capsule having a series of ports extending from a top end of the capsule. Each port is oriented to extend substantially along the longitudinal axis of the capsule. The ports are configured to extend in substantially the same direction so as to facilitate manual connection to larger assemblies including panel mounts.

In another aspect of the disclosure, the filter capsule houses a filter cartridge or membrane and loose particulate filter material with an outlet tube extending downwardly and in fluid communication with an outlet port. The filter cartridge defines a downstream core in fluid communication with the outlet tube. This permits the inlet and outlet ports to be aligned at the same end of the capsule with a unique flow pattern to permit the use of the loose particulate filter material. These and other aspects of the disclosure will become apparent from a review of the appended drawings and a reading of the following detailed description of the disclosure.

### BRIEF DESCRIPTION OF THE DRAWINGS

FIG. 1 is a side elevational view of a filter capsule according to one embodiment of the disclosure.
FIG. 2 is a bottom view of the filter capsule embodiment shown in FIG. 1.
FIG. 3 is a perspective view of the filter capsule embodiment shown in FIG. 1.
FIG. 4 is a side elevational view of a filter capsule according to another embodiment of the disclosure.
FIG. 5 is a sectional, perspective view of a filter capsule and port fittings according to one embodiment of the disclosure.
FIG. 6 is a sectional, perspective view of a filter capsule and port fittings according to another embodiment of the disclosure.
FIG. 7 is a sectional perspective view of a filter capsule and ports fittings according to a further embodiment of the disclosure.
FIG. 8 is a side elevational view of a filter capsule according to a further embodiment of the disclosure.
FIG. 9 is a bottom view of the filter capsule embodiment shown in FIG. 8.
FIG. 10 is a perspective view of the filter capsule embodiment shown in FIG. 8.
FIG. 11 is a sectional, perspective view of the filter capsule and port fittings according to the embodiment of the disclosure shown in FIG. 8.
FIG. 12 is a sectional view in elevation of a filter capsule with aligned ports and a central tube according to another embodiment of the disclosure.
FIG. 13 is a top view of the filter capsule shown in FIG. 12.
FIG. 14 is a top side perspective view of the filter capsule shown in FIG. 12.
FIG. 15 is a side sectional view in elevation of a filter capsule with a transfer tube and dispersion ring according to a further embodiment of the disclosure.
FIG. 16 is a top sectional view of the transfer tube and dispersion ring shown in FIG. 15.
FIG. 17 is a side sectional view in elevation of a filter capsule with a transfer tube and a dispersion plate according to yet another embodiment of the disclosure.
FIG. 18 is a top view of the transfer tube and dispersion plate shown in FIG. 17.

### DETAILED DESCRIPTION OF THE DISCLOSURE

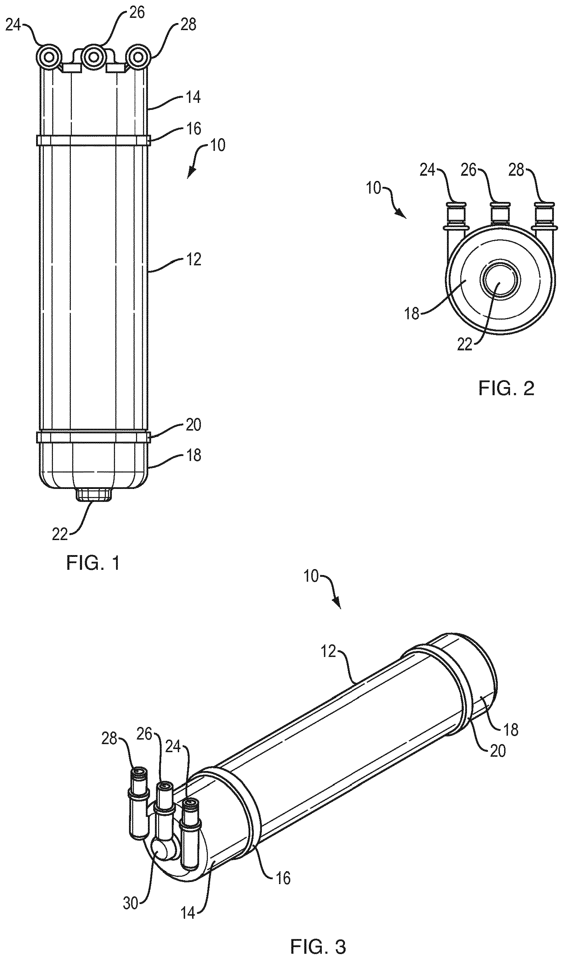

Referring to FIGS. 1-3 and 5-7, a filter capsule apparatus is shown designated generally as **10.** Capsule **10** includes a substantially cylindrical body **12** that defines a generally hollow filter chamber configured to hold one or more filter cartridges or filters **34.** Capsule **10** may be formed in other regular or irregular geometric shapes to accommodate a wide variety of larger assembly configurations to which the capsule is attached and/or to accommodate a wide variety of filter shape configurations depending upon the application. The capsule is dimensioned so as to provide an uninterrupted annular space about the enclosed filter or filter cartridge **34** to ensure unimpeded flow of fluids along the axial length of the filter cartridge.

To enclose a top end of capsule **10,** a top cap **14** having a substantially cylindrical shape (or other shape depending on the cross-sectional shape of the capsule body) conformed to the shape and dimensions of capsule body **12** and having an enclosed end and an opposing open end is thermally welded to the open end of body **12** to form a top cap joint **16.** In an alternative embodiment, body **12** and top cap **14** may be formed with corresponding threaded surfaces or male/female segments as alternative means to secure top cap **14** to body **12.** If snap-fit surfaces are used, sealing components, e.g., O-rings with corresponding mounting channels may be used to create an air/fluid tight seal. Adhesives, epoxies and the like may also be used to secure cap **14** to body **12.**

Top cap **14** may be joined to body **12** before or after the installation of filters depending upon whether the other end of body **12** has been closed. In a further alternative embodiment, top cap **14** is formed together with body **12** in the same molding process. In this embodiment a bottom cap, disclosed below, is not formed in the same molding process as top cap **14** and capsule body **12.**

For capsule bodies without an integral bottom, to enclose the bottom end of capsule body **12,** a bottom cap **18** having a substantially cylindrical shape (or other shape depending on the cross-sectional shape of the capsule body) conformed to the shape and dimensions of body **12** and having an enclosed end and an opposing open end is thermally welded to the open end of capsule **10** to form bottom cap joint **20.** In an alternative embodiment, body **12** and bottom cap **18** may be formed with corresponding threaded surfaces or male/female segments as alternative means to secure bottom cap **18** to body **12.** If snap-fit surfaces are used, sealing components, e.g., O-rings may be used to create an air/fluid tight seal. Adhesives, epoxies and the like may also be used to secure bottom cap **18** to body **12.**

Bottom cap **18** may be joined to body **12** before or after the installation of filters depending upon whether the other end of body **12** has been closed, if modular, or closed as part of the formation process of body **12.** In a further alternative embodiment, bottom cap **18** is formed together with body **12** in the same molding process. In this embodiment, a top cap, disclosed above, is not formed in the same molding process as bottom cap **18** and capsule body **12.**

Bottom cap **18** may be formed with a mounting post **22** configured to receive corresponding mounting appendages from a larger assembly such as a mounting panel. The combination of capsule body **12,** top cap **14** and bottom cap **18** form capsule **10.**

In a further alternative embodiment, in place of mounting post **22,** a drainage port may be formed in bottom cap **18** to allow fluids to be drained from the bottom end of capsule **10** without the need to engage a port formed in top cap **14** dedicated as an outlet port as more fully described below. The drainage port may be configured with a male or female connector end and may also include quick connect fittings and a modular or integrated check valve to prevent the unwanted flow of fluids and/or gases from the capsule.

Formed on, integral with, or appended to, top cap **14,** are a plurality of ports configured for connection to, and to provide fluid communication with, liquid/gas delivery and/or extraction sources. The ports may be formed with appendages, annular channels, etc., to receive sealing components, e.g., O-rings. More specifically, a cannula-shaped, essentially hollow, inlet port **24** is formed on, or secured to, a lateral edge of top cap **14** to provide a means to infuse fluids and/or gases into the filter chamber formed within capsule **10.** The location of the interface/juncture of inlet port **24** with top cap **14** may be positioned at other locations about the cap other than the lateral edge of top cap **14.**

Inlet port **24** includes modular or integral male or female fittings to accommodate and receive corresponding fittings **38** of fluid delivery tubes or channels to allow fluids and/or gases to traverse the tube/port juncture in an essentially leak free, airtight manner. Inlet port **24** may also include an integral or modular check valve to prevent the release of fluids or spillage when capsule **10** is disassembled to remove, replace or service the internal filter(s).

Formed on, integral with, or appended to, a lateral edge of top cap **14** opposite the lateral edge occupied by inlet port **24** is a cannula-shaped, essentially hollow, vent port **28.** Vent port **28** is formed on, or secured to, top cap **14** to provide a means of egress for unwanted liquids and/or gases present in the filter chamber defined by capsule **10.** The location of the interface/juncture of outlet port **28** may be positioned at other locations about the cap other than a lateral edge of top cap **14.**

Vent port **28** is initially opened to vent out resident gas when capsule **10** is being filled with the desired liquid and/or gas. Vent port **28** is otherwise closed during normal operation, or periodically opened for limited periods of time to allow the release of unwanted accumulated air and/or gas in the filter chamber.

Vent port **28** includes modular or integral male or female fittings to accommodate and receive corresponding fittings **38** of fluid receiving tubes or channels to allow fluids and/or gases to traverse the tube/port juncture in an essentially leak free, airtight manner. Vent port **28** may also include an integral or modular check valve to prevent the release of fluids or spillage when capsule **10** is disassembled to remove, replace or service the internal filter(s).

Also appended to top cap **14** is outlet port **26.** Outlet port **26** may be formed on, integral with, or appended to, top cap **14** at essentially the center of cap **14.** A cylindrical projection **30** may be formed as an interface between top cap **14** and outlet port **26.** Projection **30** forms a chamber above the plane occupied by the top surface of top cap **14** that allows the flow of air, gas or fluids to collect in the chamber and migrate out of capsule **10** after being purified through the enclosed filter. It is particularly advantageous in fluid-based applications to allow the collection and elimination of any unwanted air and/or gas that may have entered the capsule. Should particulate matter pass through filter **34,** chamber **30** provides an area for the particulate matter to collect so as to minimize any impediment the particulate matter may have on the egress of fluids and/or gases out of capsule **10.**

This configuration further allows capsule **10** to be completely filled with a desired fluid and/or gas up to the highest point of the enclosed filter to ensure full utilization of the entire filter. In this manner, utilization of substantially the entire chamber area dedicated to housing one or more filters can be maximized for the intended purpose. Projection **30** further does not impact the overall capsule length as the desired length can be maintained by adjusting the outlet height to match the heights of the inlet and vent ports that may be longer when projection **30** is incorporated into top cap **14.**

Outlet port **26** includes modular or integral male or female fittings to accommodate and receive corresponding fittings **38** of fluid receiving tubes or channels to allow fluids and/or gases to traverse the tube/port juncture in an essentially leak free, airtight manner. Outlet port **26** may also include an integral or modular check valve to prevent the release of fluids or spillage when capsule **10** is disassembled to remove, replace or service the internal filter(s).

It should be understood that the flow of fluids and/or gases through the various ports can be reversed without any reduction in function of the filter capsule. More specifically, what has been identified as inlet port **24** may function as an outlet port and what has been identified as outlet port **26** may function as an inlet port. In addition, what has been identified as vent port **28** may be utilized as either an inlet, or an outlet, port. The apparatus is designed to permit functional flow in either direction.

In this aspect of the disclosure, ports **24, 26, 28** are oriented in substantially the same plane wherein each port extends laterally from capsule **10** at an angle substantially orthogonal to a longitudinal axis of capsule **10.** Alternatively, the ports may align with, or be parallel to, the orthogonal axis, or form an angle with the longitudinal axis about +/- 45 ° from the orthogonal orientation. The ports may or may not occupy the same plane and instead, be offset to accommodate attachment to larger customized assemblies.

In a yet further alternative, each port may have a stem portion extending from top cap **14** substantially parallel with the longitudinal axis of capsule **10** and a distal portion continuous with the stem portion that deviates from the parallel orientation with the capsule longitudinal axis. The distal portion forms an angle with the stem portion wherein the distal portion occupies a plane substantially orthogonal to the capsule longitudinal axis. Alternatively, the distal portions may form an angle with the longitudinal axis of the capsule about +/- 30 ° from the orthogonal orientation. The stem portion length can be varied to control the overall length of the capsule.

Referring again to the configuration wherein the ports extend laterally from the top cap **10,** this configuration reduces the overall height of the apparatus to enable the apparatus to fit within tight dimensional portions of larger assemblies without any appreciable diminishment in the amount of capsule space dedicated to house one or more filters. The substantially unidirectional port orientation also facilitates installation onto, or into, larger assemblies, particularly panel mount assemblies, as all connection surfaces, i.e., ports face substantially the same direction. The addition of quick couplings further eases installation. A yet further advantage is experienced as the location of all the ports at substantially the highest point of capsule **10** allows for removal of the lower-positioned enclosed filters substantially without spillage.

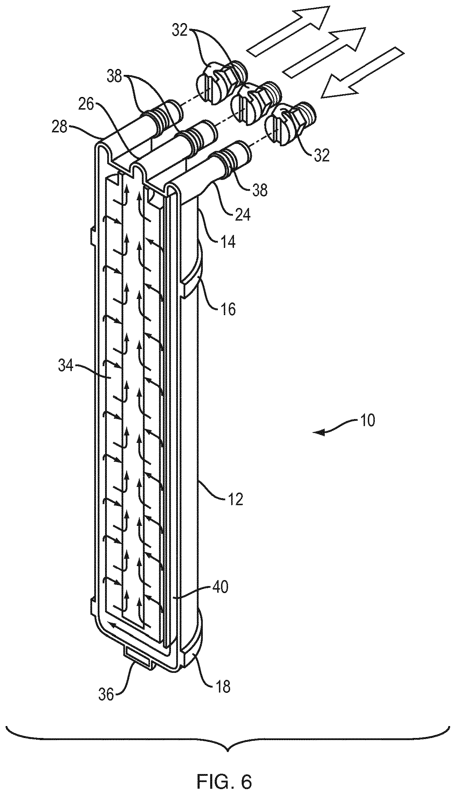

In another aspect of the disclosure as shown in FIG. 6, a transfer tube **40** is formed integral with, or appended to, an inside wall of capsule **10** to provide a channel for delivering warm and/or cold liquids and/or gases from a top end of capsule **10** to a bottom end of the capsule without requiring the liquid and/or gas to first migrate through the filter chamber. A top end of the transfer tube is connected to, and in fluid communication with, inlet port **24.** If the middle port **26** should be designated as the inlet port, tube **40** would be connected to that port to provide the desired function described below. A bottom end of the transfer tube is open to, and in fluid communication with a bottom end of the filter chamber formed and defined by capsule **10.** The bottom end of the transfer tube is positioned in close proximity to the bottom end of the filter chamber to introduce fluids at the lowest point in the filter chamber. This maximizes the beneficial effect of the transfer tube to deliver hot liquids into the chamber and allow the rising heat to minimize the development of a temperature gradient along the length of capsule **10.**

As shown in FIG. 6, fluid introduced into the capsule via inlet port **24** flows to the bottom of capsule **10** via tube **40** and flows up through the uninterrupted annular space formed between the inner wall of capsule **10** and the outer cylindrical wall of filter **34.** The fluid then traverses the filter toward the center of capsule **10** and up and out through outlet port **26.** With this configuration, heated or cooled fluids or gases introduced into capsule **10** flow to the bottom of the capsule first before entering into the filter. In this manner, normal heat dynamics cause the heated fluids/gases to rise up the chamber and dissipate heat, or promote cooling. The continual transfer of heated or cooled liquids/gases into the bottom of the capsule while previously introduced fluids exit transfer tube **40** and rise up the capsule creates a counter-current effect that minimizes the heat gradient differential from the top to the bottom of the capsule.

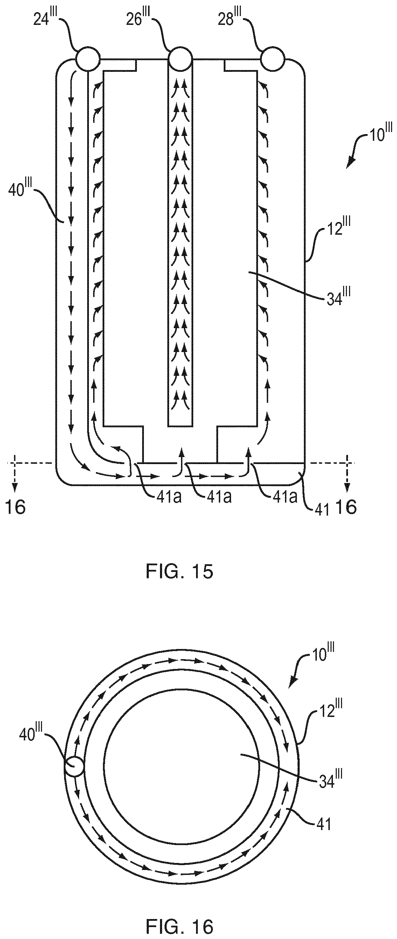

In a further aspect of the disclosure as shown in FIGS. 15 and 16, a filter capsule shown generally as **10"'** includes a housing **12"'** that defines a filter chamber within which a filter **34'"** is secured. The capsule has an inlet port **24"'**, and outlet port **26'"** and an optional vent port **28"'**. A transfer tube **40'"** extends from a top end of the capsule to a point or plane proximal to the bottom and is in fluid communication with inlet port **24"'**. Formed or positioned in a bottom end of the filter chamber is a dispersion ring **41** that defines a channel about the perimeter of the filter chamber bottom end. The channel is in fluid communication with transfer tube **40"'.** A plurality of bores or slots **41a** are formed in dispersion ring **41** to permit the flow of liquids and/or gases (heated or cooled) introduced into transfer tube **40'"** via inlet port **24'"** to flow about the bottom end of the filter chamber in a uniform manner to ensure the liquids and/or gases flowed into the chamber substantially simultaneously from all sides of the filter chamber are substantially uniform in temperature.

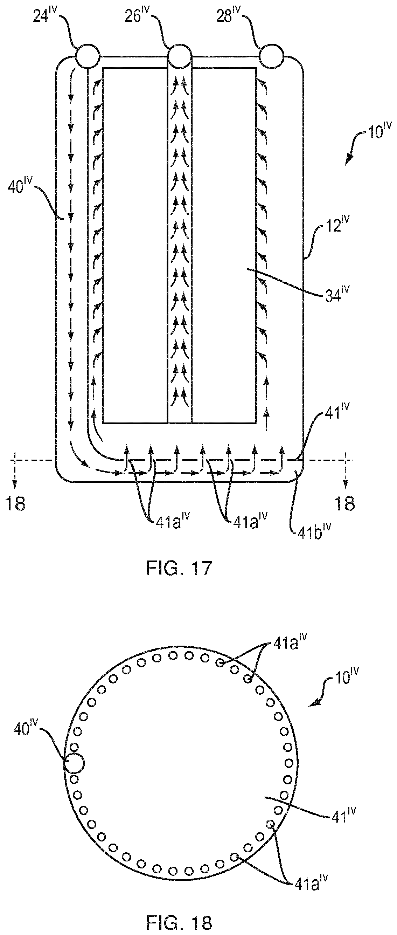

In a yet further aspect of the disclosure as shown in FIGS. 17 and 18, a filter capsule shown generally as **10^{iv}** includes a housing **12^{iv}** that defines a filter chamber within which a filter **34^{iv}** is secured. The filter chamber is dimensioned to ensure an uninterrupted annular space is maintained about filter **34^{iv}** to permit the unimpeded flow of liquids along the axial length of the filter. The capsule has an inlet port **24^{iv}**, and outlet port **26^{iv}** and an optional vent port **28^{iv}**. A transfer tube **40^{iv}** extends from a top end of the capsule to a point or plane proximal to the bottom and is in fluid communication with inlet port **24^{iv}**. Formed or positioned in a bottom end of the filter chamber is a dispersion plate **41^{iv}** that defines a dispersion chamber **41b** at the bottom end of the filter chamber. Chamber **41b** is in fluid communication with transfer tube **41^{iv}**. A plurality of bores or slots **41a^{iv}** are formed about the perimeter of plate **41^{iv}** to permit liquids and/or gases introduced into the chamber to exit up into the portions of the chamber surrounding the enclosed filter **34^{iv}**. It should be understood that the bores may also be formed within any part of the field of the dispersion plate to permit fluids to exit the chamber and travel up into the filter chamber. Location of the bores about the perimeter of the dispersion plate is particularly advantageous if the enclosed filter is secured at its bottom end to the dispersion plate, or to the bottom of housing **12^{iv}**. Should the filter be secured to the inner surface of the bottom of the housing, the dispersion plate can be formed as a ring about the bottom end of the filter/filter cartridge dedicated to secure the filter/filter cartridge to the housing. In this configuration, the dispersion chamber will be annular in shape and will have a series of bores about the entire plate to ensure uniform delivery of heated or cooled fluids, the temperature of which is maintained substantially uniform about the dispersion chamber and the filter/filter cartridge. The filter cartridge/filter may be secured to the bottom of the filter capsule or dispersion plate with friction fit components, O-ring(s), thermal or sonic bonding, adhesives, combinations of the joining methods and the like.

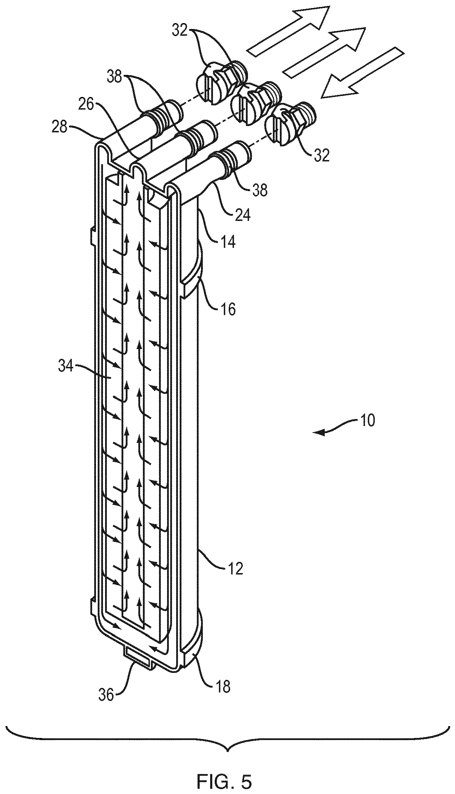

Referring again to FIG. 6, transfer tube **40** avoids the creation of significant thermal gradients that would occur without the presence of transfer tube **40.** Without tube **40,** fluid introduced into capsule **10** would follow the flow pattern illustrated in FIG. 5. The fluid would enter the capsule from the top, flow down the capsule via gravity feed and traverse filter **40** while flowing down the capsule. Once the fluid flowed through the filter, it would enter the center of capsule **10** and flow out outlet **26.** In this configuration, any heated liquid or gas introduced into the capsule would lose heat as it travels down the capsule (via gravity or pressure assist) and flows into filter **34.** In doing so, a relatively large temperature gradient is created whereby the fluid at the top of capsule **10** would have a much higher temperature than the fluid at the bottom of capsule **10.**

To achieve a specific fluid temperature or target temperature at the bottom of capsule **10,** fluid introduced into the capsule from a top end would have to have a higher temperature than the target temperature to account for heat loss as the heat transfers to fluid toward the bottom of the capsule. This is particularly problematic when the fluid introduced into the capsule is intended to act as a cleaning and/or sanitization fluid with a required temperature. When the liquids or gases reach the bottom of the capsule housing, the constant transfer of heat up the housing chamber will lead to an unacceptably low liquid or gas temperature at the bottom of the housing that can prevent proper cleaning and/or sanitization of the enclosed filter cartridge/filter.

Use of transfer tube **40** substantially eliminates these problems by harnessing well known fluid thermal dynamic properties pursuant to which fluid seeks to reach thermal equilibrium by transferring heat from relatively high heat, relatively low density fluid to fluid having relatively low heat and relatively high density. By introducing the relatively high heat liquids and/or gases at the bottom of the capsule housing, relatively lower temperature, denser liquids positioned at a higher elevation than the introduced high heat liquid or gas, will result in heat transfer up into the cooler liquid and prevent the creation of a significant temperature gradient as well as prevent the presence of any liquid or gas at an unacceptably relatively low temperature throughout the capsule. These are the conditions that become extant in a filter capsule when fluid having relatively high heat and relatively low density is introduced into the bottom of the capsule. The heat transfers naturally and more efficiently when travelling from the bottom to the top of the capsule. In this manner, the fluid in the capsule is maintained at a much more uniform temperature along the entire length of the capsule as heat transfers up the enclosed fluid.

In an alternative embodiment, to further minimize the temperature gradient, a check valve can be formed integral to, or installed within a distal end of, transfer tube **40** to prevent backflow of the fluid and/or gas up the transfer tube and into inlet port **24.** This ensures any heated fluid introduced into the capsule reaches the bottom of the capsule so as to maintain maximum heat uniformity and efficiency.

In a further embodiment of the disclosure, the transfer tube is formed on an outside surface of capsule **10** Atop end of the tube is connected to, and in fluid communication with, inlet port **24.** A bottom end of the tube is connected to a bore formed in either a bottom end of capsule body **12,** or a side wall of bottom cap **18** so as to provide fluid communication with the bottom interior of capsule **10** and permit fluid entry into the capsule at the lowest point of the filter chamber defined by the capsule.

With the use of the transfer tube positioned outside the filter capsule housing wall, embedded in the wall, or formed on, or attached to, the inner surface of the housing wall, liquids and/or gases, and heated liquids and/or gasses in particular, can be introduced into the filter chamber at substantially the bottom-most end of the filter chamber to allow the heat introduced into the chamber to flow up into the higher layers of fluid and/or gas to ensure a relatively uniform temperature gradient. Prior art systems have the top-mounted inlet ports configured to channel fluids and/or gasses into the uppermost end of the filter chamber which causes the formation of substantial temperature gradients as the cooler, more dense fluid and/or gas tends to migrate to the bottom of the chamber while the hotter, less dense fluid and/or gas tends to remain in the upper end of the chamber.

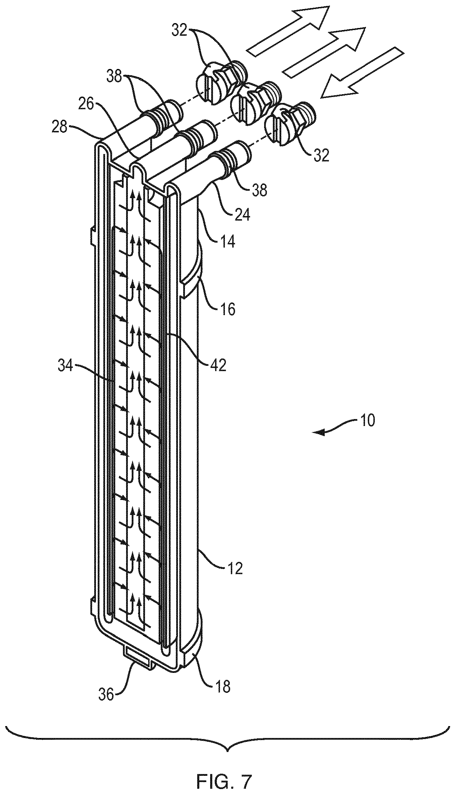

In another aspect of the disclosure as shown in FIG. 7, an encapsulating shield **42** is formed in the annular cavity between filter **34** and the inner wall of capsule **10.** The upper end of shield **42** creates a partition between the three ports so that each is isolated from the others. A bottom end of shield **42** does not extend to the bottom of capsule **10** so as to provide a fluid path between the two annular chambers formed by the presence of shield **42.** A first chamber **43** is formed between the inner wall of capsule **10** and the outer wall of shield **42.** A second chamber **45** is formed between the inner wall of shield **42** and the outer wall of filter **34.**

Fluid introduced into the capsule flows from the inlet port **24** into first annular chamber **43.** The fluid flows down the first annular chamber until reaching the bottom of capsule **10.** The flow then traverses the end of shield **42** and flows up into second annular chamber **45** from which the fluid enters into and traverses the filter. The fluid next flows out of the filter into the central chamber and out the outlet port **26.** In this configuration, vent port **28** must be closed to ensure the flow follows the stated path through the annular chambers and out the outlet port.

The use of shield **42** established a countercurrent of flow that allows the some of the heat from the higher temperature fluid in first annular chamber to transfer through shield **42** (particularly if the shield is constructed from materials having good heat transmission such as aluminum) into the upwardly flowing and lower-temperature fluid in second annular chamber **45.** This heat exchange enables the fluid to achieve a relatively uniform temperature gradient as the highest temperature fluid at the very top in first chamber **43** will transfer heat to the coolest fluid at the top of second chamber **45.** The next highest temperature fluid below the hottest fluid at the top will transfer heat to the next coolest level of fluid in the second chamber until the fluid reaches the bottom of the shield where the temperature of the fluid on either side of the bottom of shield **42** is approximately equivalent. If heat transfer through shield **42** is undesirable, shield **42** may be constructed from poor heat conducting materials as are well known in the art.

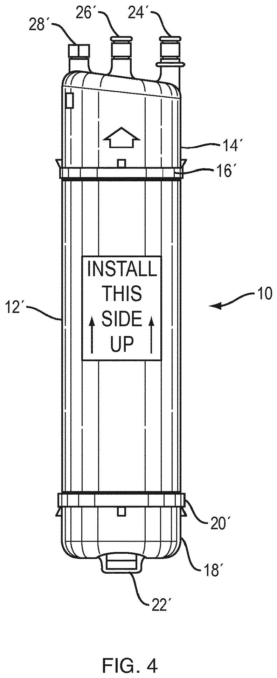

In a yet further aspect of the disclosure as shown in FIG. 4, a filter capsule **10'** is formed with, or has appended thereto, a plurality of ports that extend substantially upwardly from a top surface of a top cap **14'.** It should be understood that elements referenced with primed numbers in one embodiment correspond to elements in other embodiments with the same unprimed or differently primed numbers. Capsule **10'** includes a substantially cylindrical body **12'** that defines a generally hollow filter chamber configured to hold one or more filters. Capsule **10'** may be formed in other regular or irregular geometric shapes to accommodate a wide variety of larger assembly configurations to which the capsule is attached and/or to accommodate a wide variety of filter shape configurations depending upon the application.

To enclose a proximal, top end of capsule body **12',** a top cap **14'** having a substantially cylindrical shape conformed to the shape and dimensions of capsule body **12'** and having one enclosed end and an opposing open end is thermally welded to the proximal end of capsule body **12'** to form a top cap joint **16'**. In an alternative embodiment, capsule body **12' and** top cap **14'** may be formed with corresponding threaded surfaces or male/female segments as alternative means to secure top cap **14'** to capsule body **12'.** If snap-fit surfaces are used, sealing components, e.g., O-rings may be used to create an air/fluid tight seal. Top cap **14'** may be joined to capsule body **12'** before or after the installation of filters depending upon whether the other end of capsule **10'** has been closed.

To enclose a distal, bottom end of capsule **10',** a bottom cap **18'** having a substantially cylindrical shape conformed to the shape and dimensions of capsule boy **12'** and having an enclosed end and an opposing open end is thermally welded to the distal end of capsule body **12' to** form bottom cap joint **20'.** In an alternative embodiment, capsule body **12'** and bottom cap **18'** may be formed with corresponding threaded surfaces or male/female segments as alternative means to secure bottom cap **18'** to capsule body **12'.** If snap-fit surfaces are used, sealing components, e.g., O-rings may be used to create an air/fluid tight seal. Like top cap **14',** bottom cap **18'** may be joined to capsule body **12'** before or after installation of filters depending upon whether the other end of capsule **10'** has been closed. Bottom cap **18'** may be formed with a mounting post **22'** configured to receive corresponding mounting appendages from a larger assembly such as a mounting panel.

In an alternative embodiment, in place of mounting post **22',** a drainage port may be formed in bottom cap **18'** to allow fluids to be drained from the bottom end of capsule **10'** without engaging a port formed in top cap **14'** dedicated as an outlet port as more fully described below. The drainage port may be configured as a male or female connector and may also include quick disconnect fittings and a modular or integrated check valve.

Formed on, or appended to, top cap **14',** are a plurality of ports configured to provide fluid communication with fluid delivery or extraction sources. A cannula-shaped inlet port **24'** is essentially hollow and formed on, or secured to, a lateral edge of top cap **14' to** provide a means to infuse fluids and/or gases into the filter chamber contained in capsule **10'.** The location of the interface/juncture of inlet port **24'** may be positioned at other locations other than a lateral edge of top cap **14'.**

Inlet port **24'** includes modular or integral male or female fittings to accommodate and receive corresponding fittings of fluid delivery tubes or channels to allow fluids and/or gases to traverse the tube/port juncture in an essentially leak free, airtight manner. Inlet port **24'** may also include an integral or modular check valve to prevent the release of fluids or spillage when capsule **10'** is disassembled to remove, replace or service the internal filter(s).

Formed on, or appended to, a lateral edge of top cap **14'** opposite the lateral edge occupied by inlet port **24'** is a cannula-shaped vent port **26'.** Vent port **28'** is essentially hollow and formed on, or secured to, top cap **14** to provide a means of egress for undesired fluids and/or gases present in the filter chamber contained in capsule **10'.** It also provides a means to register the internal pressure of capsule **10' to** ambient pressure conditions. The location of the interface/juncture of vent port **26'** may be positioned at other locations other than a lateral edge of top cap **14'.**

Vent port **26'** includes modular or integral male or female fittings to accommodate and receive corresponding fittings of fluid receiving tubes or channels to allow fluids and/or gases to traverse the tube/port juncture in an essentially leak free, airtight manner. Vent port **26'** may also include an integral or modular check valve to prevent the release of fluids or spillage when capsule **10'** is disassembled to remove, replace or service the internal filter(s).

Also appended to top cap **14'** is a cannula-shaped outlet port **28'.** Outlet port **28'** may be formed on, or appended to, top cap **14'** at essentially a center of cap **14'.** A cylindrical projection **30'** may be formed as an interface between top cap **14'** and outlet port **28'.** Projection **30'** provides an enclosed area above the plane of top cap **14'** to allow air, or other unwanted substances or gases to rise and concentrate for release through outlet port **28'.** This configuration allows capsule **10'** to be completely filled with a desired fluid and/or gas without compromising any area of the chamber formed by capsule **10'** dedicated to housing filters in a desired fluid and/or gas.

Outlet port **28'** includes modular or integral male or female fittings to accommodate and receive corresponding fittings of fluid receiving tubes or channels to allow fluids and/or gases to traverse the tube/port juncture in an essentially leak free, airtight manner. Outlet port **28'** may also include an integral or modular check valve to prevent the release of fluids or spillage when capsule **10'** is disassembled to remove, replace or service the internal filter(s).

In this aspect of the disclosure, ports **24', 26', 28'** are oriented in substantially the same plane wherein each port extends vertically or upwardly from capsule **10'** wherein the occupied plane by the ports is substantially parallel to a longitudinal axis of capsule **10'.** Alternatively, the ports may occupy a plane that forms an angle with the longitudinal axis that is about +/- 45 ° from the parallel orientation. In a further alternative embodiment, the ports may or may not occupy the same plane and instead, be offset to accommodate attachment to larger customized assemblies.

This configuration with substantially uniform port orientations whereby the ports extend substantially vertically from the top of capsule **10'** does not reduce the overall height of the apparatus, but facilitates the manual connection to mated fittings when the mated fittings are not panel mounted. The addition of quick couplings further eases installation. And the location of all the ports at substantially the highest point of capsule **10'** allows for removal of the contained filters without spillage.

In another aspect of the disclosure, a transfer tube **40'** is formed integral with, or appended to, an inside wall of capsule **10'** to provide a channel for delivering warm fluids and/or gases from a top end of capsule **10'** to a bottom end of capsule **10'** without requiring the fluid and/or gas to flow through the filter chamber. A top end of the transfer tube is connected to, and in fluid communication with, inlet port **24'.** A bottom end of the transfer tube is open to, and in fluid communication with, a bottom end of the filter chamber formed by capsule **10'** to permit the entry of fluid into the chamber at the lowest point in the chamber. In an alternative embodiment, a check valve can be formed integral to, or installed within a distal end of transfer tube **40'** to prevent backflow of the fluid and/or gas up the transfer tube and into inlet port **24'.**

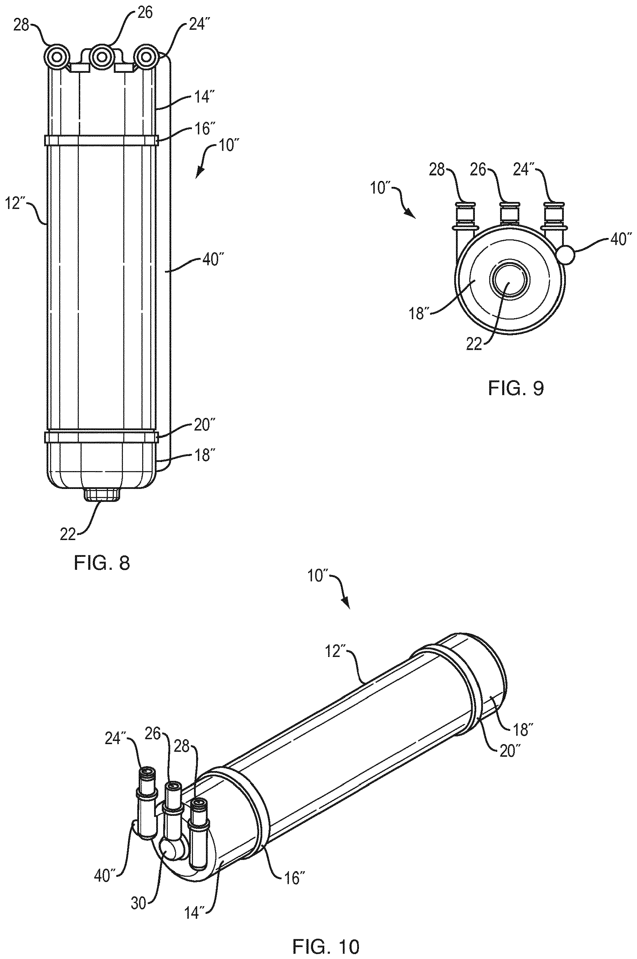

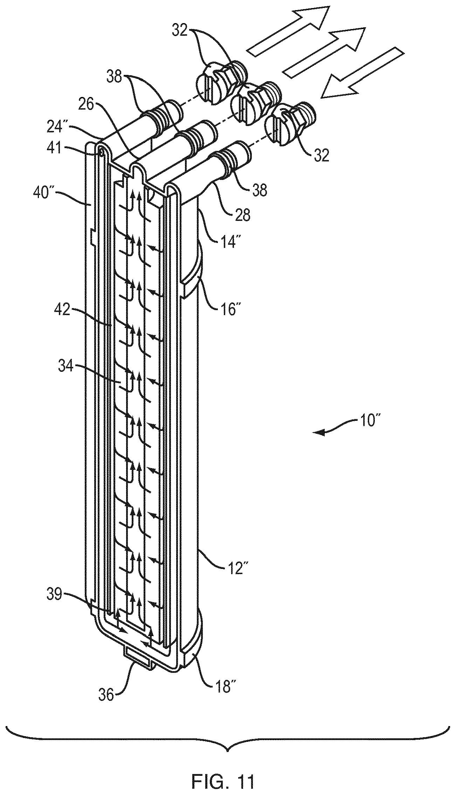

In a further embodiment of the disclosure, as shown in FIGS. 8-11, an exterior transfer tube **40"** is formed on an outside surface of a capsule **10".** A top end of the tube is connected to, and in fluid communication with, an inlet port **24"** via a top bore **41.** A bottom end of the tube is connected to a bore **39** formed in either a bottom end of capsule **10",** or a side wall of a bottom cap **18"** so as to provide fluid communication with the interior of capsule **10".**

With the use of external transfer tube **40",** fluids and/or gases, and heated fluids and/or gasses in particular, can be introduced into the filter chamber at substantially the bottom most end of the filter chamber to harness the natural tendency of heated, and therefore, less dense, fluids and/or gases to rise so as to allow the heat introduced into the chamber to transfer up into the higher layers of fluid and/or gas to ensure a relatively uniform temperature gradient. Prior art systems have the top mounted inlet ports channeling fluids and/or gasses into the uppermost end of the filter chamber that causes substantial temperature gradients to form as the cooler fluid and/or gas tends to migrate to the bottom of the chamber while the hotter fluid and/or gas tends to remain in the upper end of the chamber.

In a yet further aspect of the disclosure, an RFID chip **36** is attached to, or embedded in, a bottom portion of bottom cap **18.** In an alternative embodiment, the bottom of capsule **10** is formed as an integral part of the capsule with chip **36** embedded in the capsule forming material during manufacture. Chip **36** is embedded so as not to have any exposure to fluid or gas either inside or outside capsule **10,** and to ensure the chip is not lost or improperly replaced with an unauthorized chip such as is possible with chips secured to items with adhesive and the like. Chip **36** is configured to endure high temperature environments and is rated for high temperatures. With this configuration, chip **36** can be exposed to the high temperatures of hot water sanitation processes.

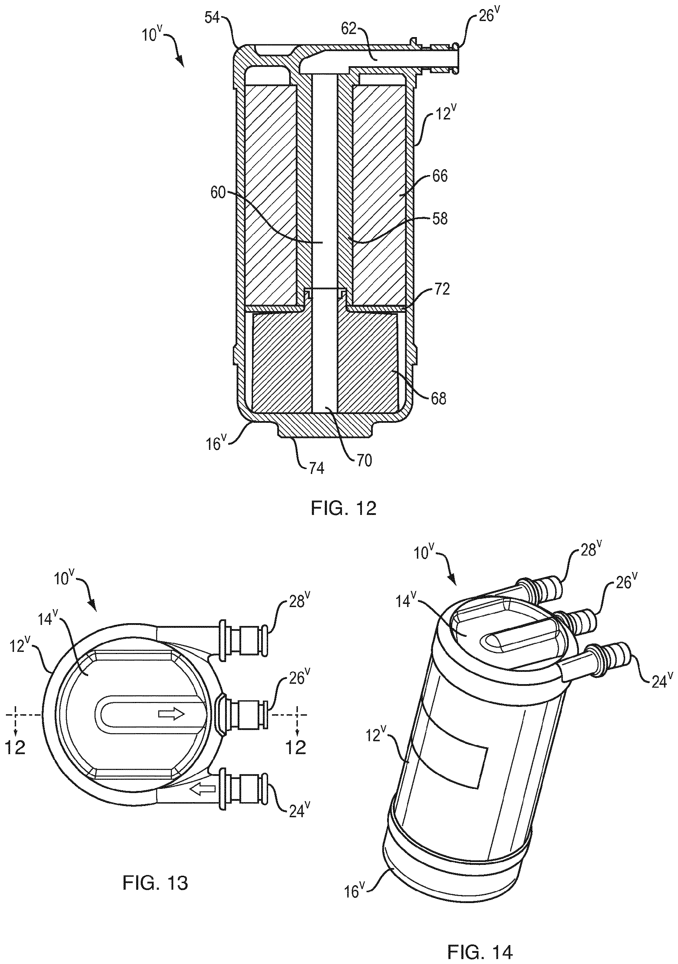

Referring now to FIGS. 12-14, in another aspect of the disclosure, a filter capsule shown designated generally as **10^{v}** includes a capsule housing or shell wall **12^{v}**, an upper end or end cap **14^{v}** and a lower end or end cap **16^{v}**. The combination of the shell wall and end caps defines a filter chamber within which is secured a filter cartridge or filter material as disclosed below. The end caps may be integral to, or modular with, the shell wall. Additional variations include one end being integral with the shell wall and the other and end cap secured to the shell wall. Any combination of integral or modular ends/end caps are within the spirit and scope of the disclosure. The means used to secure the end caps to the shell wall are those disclosed herein for other embodiments of the disclosure.

An inlet port **24^{v}** extends radially from top end **14^{v}** and may be formed to receive fittings such as quick connects. An outlet port **26^{v}** extends radially from top end **14^{v}** and is positioned with a proximal end substantially centrally located on the top end. An optional vent port **28^{v}** also extends radially from top end **14^{v}** in substantially the same plane occupied by inlet port **24^{v}** and outlet port **26^{v}**. All of the ports may be formed to receive fittings such as quick connects and the like as disclosed for other embodiments of the disclosure.

Extending downwardly and in fluid communication with the proximal end of outlet port **26^{v}** is outlet transfer tube **58** that defines an outlet channel **60.** Outlet tube **58** is configured to extend only partially down the overall length of the capsule chamber and is nonporous. A filter cartridge or membrane **68** is positioned in the end of the capsule chamber opposite the end from which the ports extend. Filter membrane **68** defines a filter membrane core **70** in fluid communication with outlet channel **60.** The combination of core **70** and outlet tube channel **60** provide a continuous downstream path for fluid and/or gas flow through the capsule housing from a bottom end of the capsule to the top.

For purposes of illustration and not limitation, for liquid processing applications, the filter material or media in the filter cartridge or membrane **68** (also broadly defined as filter material or media) may be formed from materials selected from the group consisting of polyethersulfone, nylon, cellulose acetate, cellulose nitrate, polyvinylidene fluoride, polycarbonate, polyacrylonitrile, mixed esters of cellulose, glass fiber, polyethylene, polytetrafluoroethylene and combinations thereof. Other filter materials well known in the art may also be used for this purpose and be within the scope of this disclosure.

Again for purposes of illustration and not limitation, for gas processing applications, the filter material or media in the filter cartridge or membrane **68** may be formed from materials selected from the group consisting of polyvinylidene fluoride, glass fiber, polyethylene, polytetrafluoroethylene and combinations thereof. Other filter materials well known in the art may also be used for this purpose and remain within the scope of this disclosure.

It should be understood further that any of the members of these two sets of materials may be used with their natural surface properties, or may be modified completely or partially to accommodate the material for use with liquids and/or gases. For example, one member of the illustrative list for gas applications may have its surface altered to accommodate its use with liquids. Multiple combinations of the listed materials from both sets are also possibilities for material selection. Moreover, a material identified as being particularly advantageous for gas applications may, for example, in some instances, be useful for liquid applications and vice versa.

The filter material or media in the filter cartridge or filter membrane **68** may be formed with pores ranging in size from about 0.2 microns to about 500 microns. Filter **68** may also be a HEPA (high efficiency particulate air) or an ULPA (ultra low particulate air) filter as is known in the art.

Although shown as a single cartridge **68,** multiple cartridges **68** may be secured in the bottom end of housing **10^{v}** in stacked or multi-round configurations with the multiple cores **70** joined together for stacked configurations, or with a manifold **90** that connects to, and is in fluid communication with, outlet tube **58** for multi-round configurations. The cartridges may be constructed from similar filtering materials, (membranes and other media) with similar characteristics, e.g., pore size porosity, etc.), or may differ as to materials and/or characteristics to impart selectable filtering properties tailored to a specific application. The entire apparatus may use purely gravitational force to filter incoming liquids and gases, or may use pressure to facilitate the filtering process.

A media boundary sheet **72** is positioned above filter membrane to keep loose particulates and media in a designated place separate from the cartridge filter **68** and secured to the walls of the capsule chamber as well as to outlet tube **58.** Boundary sheet **72** functions as a mechanical boundary to prevent loose media material from clogging the pores of filter membrane **68.** Boundary sheet **72** is porous to permit the passage of liquids and/or gases processed through the filter capsule. The pore sizes for boundary sheet **72** may be from about 10 microns to about 500 microns. The combination of the capsule chamber, upper end **14^{v}**, boundary sheet **72** and a radially outer wall of outlet tube **58** define a toroidal chamber within which is placed loose media based filter material **66.** Filter material **66** may be selected from the group consisting of DI resin, carbon fiber cotton fiber granular carbon, polymeric yarn, sand or other natural or synthetic granular media and combinations thereof.

Capsule **10^{v}** is designed to operate in a pressurized system with pressures ranging up to about 100 psi. For liquid and/or gas filtration, the subject liquid and/or gas is flowed into inlet port **76** and into a top end of capsule **10v.** The fluid and/or gas percolates through filter resin **66** and into filter membrane **68** via boundary layer **72.** The fluid and/or gas flows through filter membrane **68** and enters filter membrane core **70** and flows up into outlet tube channel **60** and out outlet port **64.**

The capsules, caps, tubes and ports described herein may be constructed from high heat resilient plastics, such as polypropylene, polyethylene, nylon, PFA and the like. The materials are used in conventional injection molding processes to create the capsules and related components. A key consideration for material selection is the material's ability to withstand high heat environments such as those found in sterilization equipment and autoclaves, as well as other sterilization means like gamma irradiation.

The quick couplings are configured to be compatible with coupling components manufactured and sold by, by way of example and not limitation, Linktech (Ventura, California), Colder Plastics Company (St. Paul, Minnesota) and John Guest Corp. (Fairfield, New Jersey). The check valves may be of any conventional variety known in the art that ensures one-way flow of fluids and/or gases that flow through the capsules. Examples include those sold by the aforementioned companies. It should further be understood that the male/female configuration of the set of quick-connect couplings incorporated onto a capsule may be all male, all female, or a combination of both depending upon the particular application.

## Claims

1. A filter capsule apparatus comprising:
a capsule shell having portions defining a shell wall (12"') with additional portions defining a solid, channel-free capsule shell bottom end connected to a bottom end of the shell wall (12"');
a top cap (14) secured to a top end of the shell wall (12"'), wherein the combination of the shell wall (12"'), the capsule shell bottom end and the top cap (14) define a filter chamber having a filter chamber top end proximal to and partially defined by the top cap and a filter chamber bottom end proximal to and partially defined by the capsule shell bottom end;
a filter (34"') secured in the filter chamber, wherein an annular space is defined by the shell wall (12"') and an exterior surface of the filter (34"'), wherein the annular space extends uninterrupted the entire axial length of the filter (34"'), wherein a bottom space is defined by a bottom end of the filter (34"'), an inner surface of the capsule shell bottom end and an annular segment of the shell wall (12"') below the plane occupied by the bottom end of the filter (34"'), wherein the bottom space is in uninterrupted fluid communication with the annular space, and wherein heated fluid is permitted to enter the filter (34"') radially inwardly along the axial length of the filter (34"') from the annular space;
a plurality of ports (24, 26, 28) including an inlet port (24) extending from the top cap (14),
a transfer tube (40"') having an elongate tube cylindrical wall connected in fluid isolation from the annular space and the filter (34"'), connected along its length to, and extending along the length of, the shell wall (12"'), wherein a portion of the tube wall along its axial length is integral with, or registered against, the shell wall (12"'), wherein a fluid receiving first end is secured to, and in fluid communication with, the inlet port (24) and a fluid delivery second end is secured in close proximity to the capsule shell bottom end;
**characterized by**
a dispersion ring (41) formed on, or secured to, a peripheral annular edge of the inner surface of the capsule shell bottom end within the filter chamber, wherein the dispersion ring (41) has a plurality of dispersion ring bores or slots (41a), wherein the dispersion ring (41) is in fluid communication with the second end of the transfer tube (40"'), and wherein the dispersion ring (41) is in fluid communication with the filter chamber via the plurality of ring bores or slots (41a), whereby higher-heat, lower-density heated fluid introduced into the filter capsule (10"') enters through the inlet port (24), travels downwardly inside the transfer tube (40"'), exits the transfer tube second end into the dispersion ring (41), exits the dispersion ring through the ring bores or slots (41a) into the uninterrupted bottom space of the filter chamber, and flows upwardly in the uninterrupted annular space of the filter chamber into the filter (34"'), whereby the heated fluid transfers heat to lower-heat, higher-density fluid positioned at a higher elevation in the filter chamber than the in-flowing heated fluid in a fluid column formed in the filter chamber to maintain all the fluid in the fluid column at a substantially uniform temperature throughout the axial length of the filter chamber.

2. The filter capsule apparatus (10'") of claim 1 wherein the plurality of ports (24, 26, 28) occupy substantially the same plane and extend from the top cap (14) in a uniform direction.

3. The filter capsule apparatus (10'") of claim 2 wherein the plane is selected from the group consisting of substantially orthogonal to a longitudinal axis of the shell, parallel to a longitudinal axis of the shell, +/- 45° from a plane orthogonal to a longitudinal axis of the shell and combinations thereof.

4. The filter capsule apparatus (10'") of claim 2 wherein at least one of the plurality of ports (24, 26, 28) has a quick connect connector secured to the one port.

5. The filter capsule apparatus (10'") of claim 2 wherein at least one port of the plurality of ports (24, 26, 28) has a dedicated check valve secured to the at least one port.

6. The filter capsule apparatus (10'") of claim 1 wherein the transfer tube (40'") is secured to an inner wall of the shell.

7. The filter capsule apparatus (10'") of claim 1 wherein the transfer tube (40'") is secured to an outer wall of the shell.

8. The filter capsule apparatus (10"') of claim 1 further comprising an RFID chip secured to the shell.

9. The filter capsule apparatus (10"') of claim 1 further comprising an RFID chip embedded in material forming the shell.

10. The filter capsule apparatus (10'") of claim 1 wherein the top cap (14) has portions defining a projection chamber, wherein the projection chamber is in fluid communication with one of the plurality of ports (24, 26, 28).

11. A filter capsule apparatus (10^{iv}) comprising:
a capsule shell having portions defining a shell wall (12^{iv}) with additional portions defining a solid, channel-free capsule shell bottom end connected to a bottom end of the shell wall (12^{iv});
a top cap (14) secured to a top end of the shell wall (12^{iV}), wherein the combination of the shell wall (12^{iv}), the capsule shell bottom end and the top cap (14) define a filter chamber having a filter chamber top end proximal to, and partially defined by, the top cap (14) and a filter chamber bottom end proximal to, and partially defined by, the capsule shell bottom end;
a filter (34^{iv}) secured in the filter chamber, wherein an annular space is defined by the shell wall (12'") and an exterior surface of the filter (34^{iv}), wherein the annular space extends uninterrupted the entire axial length of the filter (34^{iv}), wherein a bottom space is defined by a bottom end of the filter (34^{iv}), an inner surface of the capsule shell bottom end and an annular segment of the shell wall (12'") below the plane occupied by the bottom end of the filter (34^{iv}), wherein the bottom space is in uninterrupted fluid communication with the annular space, and wherein heated fluid is permitted to enter the filter (34^{iv}) radially inwardly along the axial length of the filter (34^{iv}) from the annular space;
a plurality of ports (24^{iv}, 26^{iv}, 28^{iv}) including an inlet port (24^{iv}) extending from the top cap (14);
a transfer tube (40^{iv}) having an elongate tube cylindrical wall connected in fluid isolation from the annular space and the filter (34^{iv}), connected along its length to, and extending along the length of, the shell wall (12^{iv}), wherein a portion of the tube wall along its axial length is integral with, or registered against, the shell wall (12^{iv}), wherein a fluid receiving first end is secured to, and in fluid communication with, the inlet port (24^{iv}) and a fluid delivery second end is secured in close proximity to the capsule shell bottom end; **characterized by**
a dispersion plate (41^{iv}) having a plurality of dispersion plate bores or slots (41a^{iv}) formed proximal to a peripheral annular edge of the dispersion plate (41^{iv}), wherein the dispersion plate (41^{iv}) is secured in the filter chamber within the bottom space, wherein the combination of the dispersion plate (41^{iv}), filter chamber wall and the inner surface of the capsule shell bottom end define an uninterrupted dispersion chamber that extends uninterrupted the entire width of the filter chamber; wherein the dispersion chamber is in fluid communication with the second end of the transfer tube (40^{iv}) and wherein the dispersion chamber is in fluid communication with the bottom space and annular space of the filter chamber via the plurality of dispersion plate bores or slots (41a^{iv}), whereby higher-heat, lower-density heated fluid introduced into the filter capsule enters through the inlet port (24), travels downwardly inside the transfer tube (40^{iv}), exits the transfer tube second end into the dispersion chamber, exits the dispersion chamber through the dispersion plate bores or slots (41a^{iv}) into the bottom space of the filter chamber, and flows upwardly in the uninterrupted annular space of the filter chamber into the filter (34^{iv}), whereby the heated fluid transfers heat to lower-heat, higher-density fluid positioned at a higher elevation in the filter chamber than the in-flowing heated fluid in a fluid column formed in the filter chamber to maintain all the fluid in the fluid column at a substantially uniform temperature throughout the axial length of the filter chamber.

12. The filter capsule apparatus (10^{iv}) of claim 11 wherein the plurality of ports (24^{iv}, 26^{iv} 28^{iv}) occupy substantially the same plane and extend from the top cap (14) in a uniform direction.

13. The filter capsule apparatus (10^{iv}) of claim 12 wherein at least one of the plurality of ports (24^{iv}, 26^{iv}, 28^{iv}) has a quick connect connector secured to the one port.

14. The filter capsule apparatus (10^{iv}) of claim 12 wherein at least one port of the plurality of ports (24^{iv}, 26^{iv}, 28^{iv}) has a check valve secured to the one port.

15. The filter capsule apparatus (10^{iv}) of claim 11 wherein the top cap (14) has portions defining a projection chamber, wherein the projection chamber is in fluid communication with one of the plurality of ports (24^{iv}, 26^{iv}, 28^{iv}).

## Patentansprüche

1. Filterkapselvorrichtung, umfassend:
eine Kapselhülse, die Abschnitte aufweist, die eine Hülsenwand (12"') definieren, mit zusätzlichen Abschnitten, die ein festes, kanalfreies unteres Ende der Kapselhülse definieren, das mit einem unteren Ende der Hülsenwand (12"') verbunden ist;
eine obere Kappe (14), die an einem oberen Ende der Hülsenwand (12'") befestigt ist, wobei die Kombination der Hülsenwand (12'"), des unteren Endes der Kapselhülse und der oberen Kappe (14) eine Filterkammer definiert, die ein oberes Ende der Filterkammer proximal zu, und teilweise durch die obere Kappe definiert, und ein unteres Ende der Filterkammer proximal zu, und teilweise durch das untere Ende der Kapselhülse definiert, aufweist;
**gekennzeichnet durch**
einen Filter (34'"), der in der Filterkammer befestigt ist, wobei ein Ringraum durch die Hülsenwand (12'") und eine Außenfläche des Filters (34'") definiert ist, wobei sich der Ringraum unterbrechungsfrei über die gesamte axiale Länge des Filters (34'") erstreckt, wobei ein unterer Raum durch ein unteres Ende des Filters (34'") definiert ist, eine Innenfläche des unteren Endes der Kapselhülse und ein Ringsegment der Hülsenwand (12'") unterhalb der Ebene von dem unteren Ende des Filters (34'") belegt ist, wobei der untere Raum in unterbrechungsfreier Fluidverbindung mit dem Ringraum steht, und wobei erwärmtes Fluid radial nach innen in den Filter (34'") entlang der axialen Länge des Filters (34'") vom Ringraum eintreten kann;
eine Mehrzahl von Anschlüssen (24, 26, 28), einschließlich eines Einlassanschlusses (24), die sich von der oberen Kappe (14) erstreckt,
ein Übertragungsrohr (40'") das eine längliche zylindrische Rohrwand aufweist, die in Fluidtrennung vom Ringraum und dem Filter (34'") verbunden ist, entlang ihrer Länge mit der Hülsenwand (12'") verbunden ist, und sich entlang der Länge davon erstreckt, wobei ein Abschnitt der Rohrwand entlang ihrer axialen Länge in die Hülsenwand (12'") integriert ist, oder gegen diese anliegt, wobei ein Fluid aufnehmendes erstes Ende an dem Einlassanschluss (24) befestigt ist, und mit diesem in Fluidverbindung steht, und ein Fluid abgebendes zweites Ende in der Nähe des unteren Endes der Kapselhülse befestigt ist;
**gekennzeichnet durch**
einen Verteilungsring (41), der an einer Umfangsringkante der Innenfläche des unteren Endes der Kapselhülse innerhalb der Filterkammer ausgebildet, oder an dieser befestigt ist, wobei der Verteilungsring (41) eine Mehrzahl von Verteilungsringbohrungen oder -schlitzen (41a) aufweist, wobei der Verteilungsring (41) in Fluidverbindung mit dem zweiten Ende des Übertragungsrohrs (40"') steht, und wobei der Verteilungsring (41) über die Mehrzahl von Ringbohrungen oder -schlitzen (41a) in Fluidverbindung mit der Filterkammer steht, wobei in die Filterkapsel (10"') eingeführtes erwärmtes Fluid mit höherer Wärme und niedrigerer Dichte durch den Einlassanschluss (24) eintritt, sich in dem Übertragungsrohr (40"') nach unten bewegt, aus dem zweiten Ende des Übertragungsrohrs in den Verteilungsring (41) eintritt, aus dem Verteilungsring durch die Ringbohrungen oder -schlitze (41a) in den unterbrechungsfreien unteren Raum der Filterkammer austritt, und in dem unterbrechungsfreien Ringraum der Filterkammer nach oben in den Filter (34"') strömt, wodurch das erwärmte Fluid Wärme auf Fluid mit niedrigerer Wärme und höherer Dichte überträgt, das auf einer höheren Höhe in der Filterkammer positioniert ist als das einströmende erwärmte Fluid in einer in der Filterkammer ausgebildeten Fluidsäule, um das gesamte Fluid in der Fluidsäule über die gesamte axiale Länge der Filterkammer auf einer im Wesentlichen gleichmäßigen Temperatur zu halten.

2. Filterkapsel (10'") nach Anspruch 1, wobei die Mehrzahl von Anschlüssen (24, 26, 28) im Wesentlichen dieselbe Ebene belegt und sich von der oberen Kappe (14) in einer einheitlichen Richtung erstreckt.

3. Filterkapsel (10'") nach Anspruch 2, wobei die Ebene aus der Gruppe bestehend aus im Wesentlichen orthogonal zu einer Längsachse der Hülse, parallel zu einer Längsachse der Hülse, +/-45° von einer Ebene orthogonal zu einer Längsachse der Hülse und Kombinationen davon ausgewählt ist.

4. Filterkapsel (10'") nach Anspruch 2, wobei mindestens einem der Mehrzahl von Anschlüssen (24, 26, 28) einen Schnellverbindungsanschluss aufweist, der an dem einen Anschluss befestigt ist.

5. Filterkapsel (10'") nach Anspruch 2, wobei mindestens ein Anschluss der Mehrzahl von Anschlüssen (24, 26, 28) ein zweckbestimmtes Rückschlagventil aufweist, das an dem mindestens einen Anschluss befestigt ist.

6. Filterkapsel (10"') nach Anspruch 1, wobei das Übertragungsrohr (40"') an einer Innenwand der Hülse befestigt ist.

7. Filterkapsel (10'") nach Anspruch 1, wobei das Übertragungsrohr (40'") an einer Außenwand der Hülse befestigt ist.

8. Filterkapsel (10'") nach Anspruch 1, ferner umfassend einen RFID-Chip, der an der Hülse befestigt ist.

9. Filterkapsel (10'") nach Anspruch 1, ferner umfassend einen RFID-Chip, der in ein Material eingebettet ist, das die Hülse ausbildet.

10. Filterkapsel (10'") nach Anspruch 1, wobei die obere Kappe (14) Abschnitte aufweist, die eine Projektionskammer definieren, wobei die Projektionskammer in Fluidverbindung mit einem der Mehrzahl von Anschlüssen (24, 26, 28) steht.

11. Filterkapselvorrichtung (10^{iv}), umfassend:
eine Kapselhülse, die Abschnitte aufweist, die eine Hülsenwand (12^{iv}) definieren, mit zusätzlichen Abschnitten, die ein festes, kanalfreies unteres Ende der Kapselhülse definieren, das mit einem unteren Ende der Hülsenwand (12^{iv}) verbunden ist;
eine obere Kappe (14), die an einem oberen Ende der Hülsenwand (12^{iv}) befestigt ist, wobei die Kombination der Hülsenwand (12^{iv}), des unteren Endes der Kapselhülse und der oberen Kappe (14) eine Filterkammer definiert, die ein oberes Ende der Filterkammer proximal zu, und teilweise durch die obere Kappe (14), und ein unteres Ende der Filterkammer proximal zu, und teilweise durch das untere Ende der Kapselhülse definiert, aufweist;
einen Filter (34^{iv}), der in der Filterkammer befestigt ist, wobei ein Ringraum durch die Hülsenwand (12'") und eine Außenfläche des Filters (34^{iv}) definiert ist, wobei sich der Ringraum unterbrechungsfrei über die gesamte axiale Länge des Filters (34^{iv}) erstreckt, wobei ein unterer Raum durch ein unteres Ende des Filters (34^{iv}), eine Innenfläche des unteren Endes der Kapselhülse und ein Ringsegment der Hülsenwand (12'") unterhalb der Ebene definiert ist, die vom unteren Ende des Filters (34^{iv}) belegt ist, wobei der untere Raum in unterbrechungsfreier Fluidverbindung mit dem Ringraum steht, und wobei erwärmtes Fluid radial nach innen in den Filter (34^{iv}) entlang der axialen Länge des Filters (34^{iv}) vom Ringraum eintreten kann;
eine Mehrzahl von Anschlüssen (24^{iv}, 26^{iv}, 28^{iv}), einschließlich eines Einlassanschlusses (24^{iv}), die sich von der oberen Kappe (14) erstreckt;
ein Übertragungsrohr (40^{iv}) das eine längliche zylindrische Rohrwand aufweist, die in Fluidtrennung vom Ringraum und dem Filter (34^{iv}) verbunden ist, entlang ihrer Länge mit der Hülsenwand (12^{iv}) verbunden ist, und sich entlang der Länge davon erstreckt, wobei ein Abschnitt der Rohrwand entlang ihrer axialen Länge in die Hülsenwand (12^{iv}) integriert ist, oder gegen diese anliegt, wobei ein Fluid aufnehmendes erstes Ende an dem Einlassanschluss (24^{iv}) befestigt ist, und mit diesem in Fluidverbindung steht, und ein Fluid abgebendes zweites Ende in der Nähe des unteren Endes der Kapselhülse befestigt ist; **gekennzeichnet durch**
eine Verteilungsplatte (41^{iv}), die eine Mehrzahl von Verteilungsplattenbohrungen oder -schlitzen (41a^{iv}) aufweist, die proximal zu einer Umfangsringkante der Verteilungsplatte (41^{iv}) ausgebildet sind, wobei die Verteilungsplatte (41^{iv}) in der Filterkammer innerhalb des unteren Raums befestigt ist, wobei die Kombination der Verteilungsplatte (41^{iv}), Filterkammerwand und der Innenfläche des unteren Endes der Kapselhülse eine unterbrechungsfreie Verteilungskammer definieren, die sich unterbrechungsfrei über die gesamte Breite der Filterkammer erstreckt; wobei die Verteilungskammer in Fluidverbindung mit dem zweiten Ende des Übertragungsrohrs (40^{iv}) steht, und wobei die Verteilungskammer über die Mehrzahl von Verteilungsplattenbohrungen oder -schlitzen (41a^{iv}) in Fluidverbindung mit dem unteren Raum und Ringraum der Filterkammer steht, wodurch in die Filterkapsel eingeführtes erwärmtes Fluid mit höherer Wärme und niedrigerer Dichte durch den Einlassanschluss (24) eintritt, sich in dem Übertragungsrohr (40^{iv}) nach unten bewegt, aus dem zweiten Ende des Übertragungsrohrs in die Verteilungskammer austritt; aus der Verteilungskammer durch die Verteilungsplattenbohrungen oder -schlitze (41a^{iv}) in den unteren Raum der Filterkammer, und nach oben in den unterbrechungsfreien Ringraum der Filterkammer in den Filter (34^{iv}) strömt, wobei das erwärmte Fluid Wärme auf Fluid mit niedrigerer Wärme und höherer Dichte überträgt, das auf einer höheren Höhe in der Filterkammer positioniert ist als das einströmende erwärmte Fluid in einer in der Filterkammer ausgebildeten Fluidsäule, um das gesamte Fluid in der Fluidsäule über die gesamte axiale Länge der Filterkammer auf einer im Wesentlichen gleichmäßigen Temperatur zu halten.

12. Filterkapsel (10^{iv}) nach Anspruch 11, wobei die Mehrzahl von Anschlüssen (24^{iv}, 26^{iv}, 28^{iv}) im Wesentlichen dieselbe Ebene belegt und sich von der oberen Kappe (14) in einer einheitlichen Richtung erstreckt.

13. Filterkapsel (10^{iv}) nach Anspruch 12, wobei mindestens einer der Mehrzahl von Anschlüssen (24^{iv}, 26^{iv}, 28^{iv}) einen Schnellverbindungsanschluss aufweist, der an dem einen Anschluss befestigt ist.

14. Filterkapsel (10^{iv}) nach Anspruch 12, wobei mindestens ein Anschluss der Mehrzahl von Anschlüssen (24^{iv}, 26^{iv}, 28^{iv}) ein Rückschlagventil aufweist, das an dem einen Anschluss befestigt ist.

15. Filterkapsel (10^{iv}) nach Anspruch 11, wobei die obere Kappe (14) Abschnitte aufweist, die eine Projektionskammer definieren, wobei die Projektionskammer in Fluidverbindung mit einem der Mehrzahl von Anschlüssen (24^{iv}, 26^{iv}, 28^{iv}) steht.

## Revendications

1. Appareil à capsule filtrante comprenant :
une coque de capsule ayant des parties définissant une paroi de coque (12"') avec des parties supplémentaires définissant une extrémité inférieure de coque de capsule solide et sans canal reliée à une extrémité inférieure de la paroi de coque (12"') ;
un capuchon supérieur (14) fixé à une extrémité supérieure de la paroi de coque (12"'), dans lequel la combinaison de la paroi de coque (12"'), de l'extrémité inférieure de la coque de capsule et du capuchon supérieur (14) définit une chambre filtrante ayant une extrémité supérieure de chambre de filtre proximale à et partiellement définie par le capuchon supérieur et une extrémité inférieure de chambre de filtre proximale à et partiellement définie par l'extrémité inférieure de coque de capsule ;
**caractérisé par**
un filtre (34"') fixé dans la chambre de filtre, dans lequel un espace annulaire est défini par la paroi de coque (12"') et une surface extérieure du filtre (34"'), dans lequel l'espace annulaire s'étend sans interruption sur toute la longueur axiale du filtre (34"'), dans lequel un espace inférieur est défini par une extrémité inférieure du filtre (34"'), une surface interne de l'extrémité inférieure de la coque la capsule et un segment annulaire de la paroi de coque (12"') sous le plan occupé par l'extrémité inférieure du filtre (34"'), dans lequel l'espace inférieur est en communication fluidique ininterrompue avec l'espace annulaire et dans lequel le fluide chauffé est autorisé à entrer dans le filtre (34"') radialement vers l'intérieur le long de la longueur axiale du filtre (34"') à partir de l'espace annulaire ;
une pluralité d'orifices (24, 26, 28) comprenant un orifice d'entrée (24) s'étendant depuis le capuchon supérieur (14),
un tube de transfert (40'") ayant une paroi cylindrique de tube allongé reliée de manière isolée des fluides par rapport à l'espace annulaire et le filtre (34"'), reliée sur sa longueur à et s'étendant sur la longueur de la paroi de coque (12"'), dans lequel une partie de la paroi du tube le long de sa longueur axiale est solidaire de, ou alignée contre, la paroi de coque (12"'), dans lequel une première extrémité de réception de fluide est fixée à, et en communication fluidique avec, l'orifice d'entrée (24) et une seconde extrémité de distribution de fluide est fixée à proximité immédiate de l'extrémité inférieure de la coque de capsule ; **caractérisé par**
un anneau de dispersion (41) formé sur, ou fixé à, un bord annulaire périphérique de la surface interne de l'extrémité inférieure de la coque de capsule à l'intérieur de la chambre de filtre, dans lequel l'anneau de dispersion (41) a une pluralité d'alésages ou de fentes d'anneau de dispersion (41a), dans lequel l'anneau de dispersion (41) est en communication fluidique avec la seconde extrémité du tube de transfert (40'") et dans lequel l'anneau de dispersion (41) est en communication fluidique avec la chambre de filtre via la pluralité d'alésages ou fentes annulaires (41a), moyennant quoi le fluide chauffé à chaleur plus élevée et de densité inférieure introduit dans la capsule filtrante (10"') entre par l'orifice d'entrée (24), se déplace vers le bas à l'intérieur du tube de transfert (40"'), sort de la seconde extrémité du tube de transfert dans l'anneau de dispersion (41), sort de l'anneau de dispersion à travers les alésages ou les fentes annulaires (41a) dans l'espace inférieur ininterrompu de la chambre de filtre et s'écoule vers le haut dans l'espace annulaire ininterrompu de la chambre de filtre dans le filtre (34"'), moyennant quoi le fluide chauffé transfère la chaleur au fluide à chaleur plus faible et de densité supérieure positionné à une altitude plus élevée dans la chambre de filtre que le fluide chauffé entrant dans une colonne de fluide formée dans la chambre de filtre pour maintenir tout le fluide de la colonne de fluide à une température sensiblement uniforme sur toute la longueur axiale de la chambre de filtre.

2. Capsule filtrante (10"') selon la revendication 1, dans laquelle la pluralité d'orifices (24, 26, 28) occupent sensiblement le même plan et s'étendent depuis le capuchon supérieur (14) dans une direction uniforme.

3. Capsule filtrante (10"') selon la revendication 2, dans laquelle le plan est sélectionné dans le groupe consistant en sensiblement orthogonal à un axe longitudinal de la coque, parallèle à un axe longitudinal de la coque, +/- 45° d'un plan orthogonal à un axe longitudinal de la coque et des combinaisons de ceux-ci.

4. Capsule filtrante (10"') selon la revendication 2, dans laquelle au moins l'un de la pluralité d'orifices (24, 26, 28) a un connecteur à raccord rapide fixé à un orifice.

5. Capsule filtrante (10"') selon la revendication 2, dans laquelle au moins un orifice de la pluralité d'orifices (24, 26, 28) a un clapet anti-retour dédié fixé à l'au moins un orifice.

6. Capsule filtrante (10"') selon la revendication 1, dans laquelle le tube de transfert (40"') est fixé à une paroi interne de la coque.

7. Capsule filtrante (10"') selon la revendication 1, dans laquelle le tube de transfert (40"') est fixé à une paroi externe de la coque.

8. Capsule filtrante (10"') selon la revendication 1, comprenant en outre une puce RFID fixée à la coque.

9. Capsule filtrante (10"') selon la revendication 1, comprenant en outre une puce RFID incorporée dans le matériau formant la coque.

10. Capsule filtrante (10"') selon la revendication 1, dans laquelle le capuchon supérieur (14) a des parties définissant une chambre de projection, dans laquelle la chambre de projection est en communication fluidique avec l'un de la pluralité d'orifices (24, 26, 28).

11. Appareil à capsule filtrante (10^{iv}) comprenant :
une coque de capsule ayant des parties définissant une paroi de coque (12^{iv}) avec des parties supplémentaires définissant une extrémité inférieure de coque de capsule solide et sans canal reliée à une extrémité inférieure de la paroi de coque (12^{iv}) ;
un capuchon supérieur (14) fixé à une extrémité supérieure de la paroi de coque (12^{iv}), dans lequel la combinaison de la paroi de coque (12^{iv}), de l'extrémité inférieure de coque de capsule et du capuchon supérieur (14) définit une chambre de filtre ayant un extrémité supérieure de chambre de filtre proximale à, et partiellement définie par, le capuchon supérieur (14) et une extrémité inférieure de chambre de filtre proximale à, et partiellement définie par, l'extrémité inférieure de coque de capsule ;
un filtre (34^{iv}) fixé dans la chambre de filtre, dans lequel un espace annulaire est défini par la paroi de coque (12"') et une surface extérieure du filtre (34^{iv}), dans lequel l'espace annulaire s'étend sans interruption sur toute la longueur axiale u filtre (34^{iv}), dans lequel un espace inférieur est défini par une extrémité inférieure du filtre (34^{iv}), une surface interne de l'extrémité inférieure de la coque de capsule et un segment annulaire de la paroi de coque (12"') sous le plan occupé par l'extrémité inférieure du filtre (34^{iv}), dans lequel l'espace inférieur est en communication fluidique ininterrompue avec l'espace annulaire et dans lequel le fluide chauffé est autorisé à entrer dans le filtre (34^{iv}) radialement vers l'intérieur le long de la longueur axiale du filtre (34^{iv}) depuis l'espace annulaire ;
une pluralité d'orifices (24^{iv}, 26^{iv}, 28^{iv}) comprenant un orifice d'entrée (24^{iv}) s'étendant depuis le capuchon supérieur (14) ;
un tube de transfert (40^{iv}) ayant une paroi cylindrique de tube allongé reliée de manière isolé des fluides par rapport à l'espace annulaire et le filtre (34^{iv}), reliée sur sa longueur à et s'étendant sur la longueur de la paroi de coque (12^{iv}), dans lequel une partie de la paroi du tube le long de sa longueur axiale est solidaire de, ou alignée contre, la paroi de coque (12^{iv}), dans lequel une première extrémité de réception de fluide est fixée à, et en communication fluidique avec, l'orifice d'entrée (24^{iv}) et une seconde extrémité de distribution de fluide est fixée à proximité immédiate de l'extrémité inférieure de la coque de capsule ; **caractérisé par**
une plaque de dispersion (41^{iv}) ayant une pluralité d'alésages ou de fentes de plaque de dispersion (41a^{iv}) formés à proximité d'un bord annulaire périphérique de la plaque de dispersion (41^{iv}), dans lequel la plaque de dispersion (41^{iv}) est fixée dans la chambre de filtre à l'intérieur de l'espace inférieur, dans lequel la combinaison de la plaque de dispersion (41^{iv}), de la paroi de la chambre de filtre et de la surface interne de l'extrémité inférieure de la coque de capsule définit une chambre de dispersion ininterrompue qui s'étend sans interruption sur toute la largeur de la chambre de filtre ; dans lequel la chambre de dispersion est en communication fluidique avec la seconde extrémité du tube de transfert (40^{iv}) et dans lequel la chambre de dispersion est en communication fluidique avec l'espace inférieur et l'espace annulaire de la chambre de filtre par l'intermédiaire de la pluralité d'alésages ou de fentes de plaque de dispersion (41a^{iv}), moyennant quoi le fluide chauffé à chaleur plus élevée et de densité inférieure introduit dans la capsule filtrante entre par l'orifice d'entrée (24), se déplace vers le bas à l'intérieur du tube de transfert (40^{iv}), sort de la seconde extrémité du tube de transfert dans la chambre de dispersion, sort de la chambre de dispersion à travers les alésages ou fentes de plaque de dispersion (41a^{iv}) dans l'espace inférieur de la chambre de filtre et s'écoule vers le haut dans l'espace annulaire ininterrompu de la chambre de filtre dans le filtre (34^{iv}), moyennant quoi le fluide chauffé transfère la chaleur au fluide à chaleur plus faible, de densité supérieure, positionné à une altitude plus élevée dans la chambre de filtre que le fluide chauffé entrant dans une colonne de fluide formée dans la chambre de filtre pour maintenir tout le fluide dans la colonne de fluide à une température sensiblement uniforme sur toute la longueur axiale de la chambre de filtre.

12. Capsule filtrante (10^{iv}) selon la revendication 11, dans laquelle la pluralité d'orifices (24^{iv}, 26^{iv}, 28^{iv}) occupent sensiblement le même plan et s'étendent depuis le capuchon supérieur (14) dans une direction uniforme.

13. Capsule filtrante (10^{iv}) selon la revendication 12, dans laquelle au moins l'un de la pluralité d'orifices (24^{iv}, 26^{iv}, 28^{iv}) a un connecteur à raccord rapide fixé audit orifice.

14. Capsule filtrante (10^{iv}) selon la revendication 12, dans laquelle au moins un orifice de la pluralité d'orifices (24^{iv}, 26^{iv}, 28^{iv}) a un clapet anti-retour fixé audit orifice.

15. Capsule filtrante (10^{iv}) selon la revendication 11, dans laquelle le capuchon supérieur (14) a des parties définissant une chambre de projection, dans laquelle la chambre de projection est en communication fluidique avec l'un de la pluralité d'orifices (24^{iv}, 26^{iv}, 28^{iv}).
